# EUROPEAN PATENT SPECIFICATION

(11) **EP 4 122 799 B1**
(45) Date of publication and mention of the grant of the patent: **21.02.2024**
(21) Application number: 21187320.3
(22) Date of filing: 23.07.2021
(51) Int. Cl.: B62B 1/12, B65H 75/40, B65H 75/44

(54) **HOSE TROLLEY**
SCHLAUCHWAGEN
CHARIOT DE TUYAU

(43) Date of publication of application: 25.01.2023
(73) Proprietor: HUSQVARNA AB, 561 82 Huskvarna (SE)
(72) Inventor: Mock, Axel, 89134 Blaustein (DE); Schlegel, Tobias, 89171 Illerkirchberg (DE)
(74) Representative: Finkele, Rolf

(56) References cited:
- EP-B1- 3 532 418
- CN-U- 210 102 020
- US-A- 5 915 723
- US-A1- 2015 054 240
- US-A1- 2019 248 621

## Description

### TECHNICAL FIELD

The present invention relates to a hose trolley. More particularly, the present invention pertains to the hose trolley with safe and less accident-prone application.

### BACKGROUND

A hose trolley is generally used to carry hose box to different installations, such as lawns, parks, and the like for providing a flow of fluid, such as water. The conventional hose trolley includes a frame that may further includes a handle, some support features, one or more wheels and a hose box. Such provision of the support features and the wheel may prove inadequate to support or part the hose trolley, such as for applications involving winding/unwinding of the hose from the hose box.

Moreover, the conventional hose trolley suffers from various demerits related to user-convenience and stability on a level surface say ground surface. For instance, if a hose is pulled out of the hose box at an angle relative to the hose trolley, the hose trolley may be prone to turn, or even topple accidentally. This may lead to damage to the hose trolley and may even be quite unsafe for users of the hose trolley.

An example of a hose trolley is provided in United States patent 5,007,598 (hereinafter referred to as '598 reference). The '598 reference provides a portable hose reel assembly including a wheeled frame structure rotatably supporting a hose reel structure by a shaft assembly. The shaft assembly communicates water under pressure to a hose to be wound on the hose reel structure. The frame structure includes a pair of molded plastic three-cornered side frames and four blow molded plastic members rigidly interconnected therebetween. However, the '598 reference seems short of disclosing any arrangement for the hose trolley which may limit or eliminate the tendency to fall-over when the hose is pulled out of the hose box, such as at an angle relative to the hose trolley.

Another example of the hose trolley is provided in European patent EP 3 532 418 (hereinafter referred to as '418 reference). The '418 reference provides a hose cart with a carrier frame. The carrier frame includes a guide handle. The hose cart further includes a hose drum held in the carrier frame. The hose drum carries a hose reel wound around the hose drum. The hose cart includes a first support bracket attached to the carrier frame. The first support bracket supports the hose cart on a ground surface from a first end. The hose cart further includes at least one second support bracket attached to the carrier frame. The second support bracket supports the hose cart on the ground surface from a second end. The second support bracket is pivotable between a first position and a second position. The first position is associated with a non- operational configuration of the hose cart and the second position is associated with an operational configuration of the hose cart.

Another example of the hose trolley is provided in Chinese patent CN 210 102 020 (hereinafter referred to as '020 reference). The '020 reference provides a hose winding and unwinding trolley which comprises a chassis and a plurality of casters disposed below the chassis. A hose reel is rotatably mounted on the chassis of the trolley. Further, a friction driving wheel is disposed below the chassis and connected to drive the hose reel through a transmission. The friction drive wheel has a ground-contacting position in contact with the ground and a ground-contacting position separated from the ground.

An example of a cable reel trolley is provided in United States patent application US 2015/054240 (hereinafter referred to as '240 reference). The '240 reference provides a cable reel trolley that includes a main body fixed with a carrying unit. The cable reel trolley further includes a wheel frame and a third wheel at the bottom such that the third wheel is parallel to the wheel frame. The wheel frame has two ends respectively installed with a first wheel and a second wheel. A direction-swaying member is fixed between the wheel frame and the first wheel such that the direction-swaying member is able to shift the axial direction of the first wheel. Consequently, the trolley moves with the first wheel and the second wheel or with the first wheel and the third wheel.

An example of a reel assembly is provided in United States patent application US 2019/0248621 (hereinafter referred to as '240 reference). The '240 reference provides a pivotable reel assembly that includes a frame comprising a base and an elongate mounting portion configured to pivot relative to the base about a pivot axis. The elongate mounting portion includes a proximal portion coupled with the base, a distal portion, and an intermediate portion between the proximal and distal portions. A spool drum is connected with the intermediate portion of the elongate mounting portion. The spool drum is configured to rotate about a rotational axis to spool and unspool a linear element such that the rotational axis generally transverse to the pivot axis. A wheel is connected to the distal portion of the elongate mounting portion and is further configured to roll about the pivot axis. The distal portion positions the wheel along a transverse axis that is generally transverse to the rotational axis and the pivot axis.

Thus, there is a need of an improved hose trolley that may provide a safe application and limit or eliminate the tendency to fall-over.

### SUMMARY

In view of the above, it is an objective of the present invention to solve or at least reduce the drawbacks discussed above. According to the invention the objective is achieved by a hose trolley as defined in claim 1. Preferred embodiments are defined in the dependent claims. The hose trolley includes a frame that defines a central axis. The frame includes a handle, a support stand, one or more wheels and a hose reel (or a hose box). The hose box is housed within the frame along the central axis. The support stand allows to support the hose trolley on a level surface. The hose trolley further includes a ground support element. The hose trolley has at least an operating position and a driving position. Further, the ground support element is rotatably connected to the hose trolley. In the operating position, the hose trolley is supported on the level surface by the support stand and the ground support element. In the driving position, the hose trolley is supported on the level surface by the wheels. The hose trolley is movable on the level surface in the driving position.

Thus, the present invention provides the hose trolley with improved dynamic stability, and fall-over protection. The dynamic stability in operating position is achieved by virtue of the rotatable ground support element and the support stand. The ground support element and the support stand assist in slight turning or sideways movement of the hose trolley, as required when a hose is pulled out of the hose box at an angle relative to the hose trolley. Thus, a fall-over or toppling tendency of the hose trolley is substantially reduced or eliminated. Further, the dynamic stability in operating driving position is achieved by virtue of the one or more wheels. The one or more wheels surface may be designed to provide better grip on the level surface or avoid slip on the level surface.

According to an embodiment of the present invention, the ground support element is in a first position and a second position for the operating position and the driving position respectively of the hose trolley. The ground support element may operatively be rotated between the first position and the second position to allow for the dynamic stability in the operating position and the freedom of driving/movement of the wheels in the driving position, respectively.

According to an embodiment of the present invention, in the first position the ground support element is engageable with the level surface and in the second position the ground support element is disposed away from the level surface. The rotational movement of the ground support element towards and away from the level surface allows for easy and quicky transition of the hose trolley from the operating position to the driving position and vice-versa.

The ground support element and the support stand are adapted to support the hose reel on the level surface such that the ground support element allows the rotation of the hose trolley with respect to the level surface. Such an arrangement allows to substantially reduce or eliminate the tendency of the hose trolley to topple or fall-over on the level surface due to torque generated due to hose pulling and the like. Thus, the addition of rotation feature to the hose trolley makes its operation user-friendly.

According to an embodiment of the present invention, the wheels are two wheels which do not contact the level surface, when the hose trolley is in the operating position. The two wheels may be operationally coupled each on both the sides of the hose trolley to provide sideways fall-over support. The two wheels do not contact the level surface so as to not to restrict the sideways or turning movement of the hose trolley, during the operating position.

According to an embodiment of the present invention, the one or more wheels are at a distance of about 1-2 cm from the level surface. The one or more wheels do not contact the level surface in the operating position. Thus, the hose trolley may be able to freely turn (during hose pulling events etc.) on experiencing torque and avoid or minimize the possibility of toppling or fall-over on the level surface.

According to an embodiment of the present invention, the support stand includes one or more plastic bases which contact the level surface. The plastic bases may reduce the required bending radius of the support stand (say an aluminum tube). Further, the friction of the plastic bases may be lower than the aluminum tube and thus may additionally allow a better turning of the hose trolley.

According to an embodiment of the present invention, the one or more plastic bases are provided with rollers. The rollers on the plastic bases may further reduce the friction. Thus, the hose trolley may be able to turn with ease and eliminate or minimize the fall-over tendency on the level surface.

According to an embodiment of the present invention, in the driving position the ground support element is at a distance of about 3-5 cm from the level surface. In the driving position, the ground support element and the support stand do not contact the level surface. Thus, the hose trolley may be easily maneuvered on the level surface in the driving position with the help of the one or more wheels.

According to an embodiment of the present invention, the handle is pivotably coupled to the frame. The pivotable nature of the handle may improve the ergonomics of the hose trolley. Further, the frame may occupy less space during storage.

According to an embodiment of the present invention, the handle is telescopic. The telescopic nature of the handle may further improve the ergonomics of the hose trolley. The user may adjust the height of the handle to a comfortable position and easily hold or maneuver the hose trolley on the level surface.

Other features and aspects will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a hose trolley in a driving position, in accordance with an aspect of the present invention;
**FIG. 2** shows a perspective side view of the hose trolley in an operating position, in accordance with an aspect of the present invention;
**FIG. 3** shows a perspective side view of the hose trolley in the driving position, in accordance with an aspect of the present invention;
**FIG. 4** shows a perspective view of the hose trolley in the operating position, in accordance with an aspect of the present invention;
**FIG. 5** shows a perspective front view of the hose trolley in the operating position, in accordance with an aspect of the present invention; and
**FIG. 6** shows a perspective back view of the hose trolley in the operating position, in accordance with an aspect of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. The invention is defined by the claims only.

In the drawings, like numbers refer to like elements.

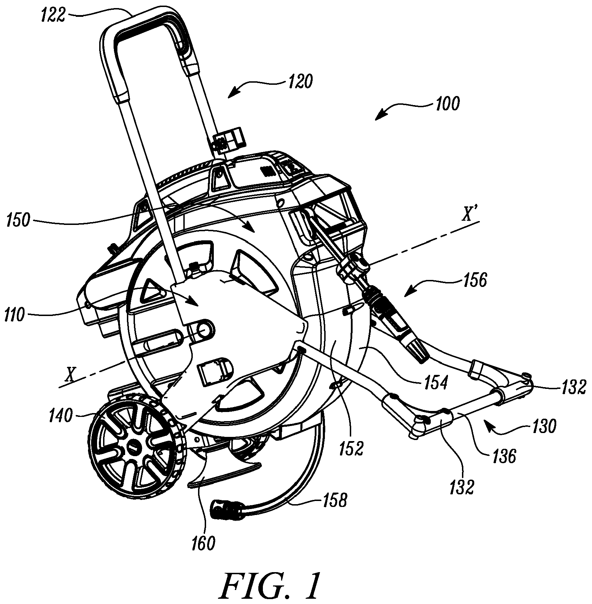

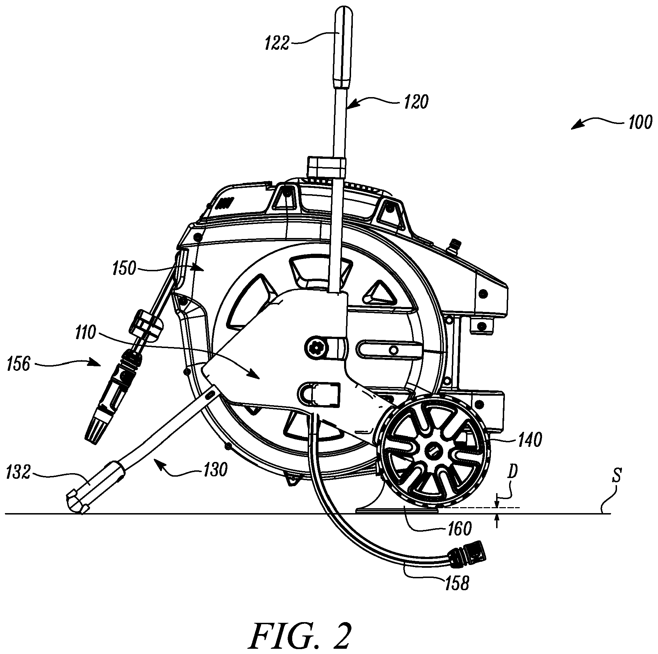

**FIGS. 1** and **2** illustrate a hose trolley **100.** The hose trolley **100** is used to house, store and transport a hose reel **150** (alternately referred to as a hose box **150)** to different installations, such as lawns, parks, and the like for providing a flow of fluid, such as water. The present disclosure illustrates a hose box in various embodiments, however actual implantation may have any hose reel or box without any limitations. The flow of fluid may be provided for firefighting, gardening, surface cleaning and the like activities. The hose trolley **100** includes a frame **110** that defines a central axis **X-X'.** The frame **110** may be rigid as well as light weight, depending upon application requirements, user-preference, or other considerations. The frame **110** may be manufactured using a metal (preferably aluminum), alloy and the like. The frame **110** of the hose trolley **100** includes a handle **120,** a support stand **130,** one or more wheels **140** and the hose box **150.** The hose box **150** is housed within the frame **110** along the central axis **X-X'.** The hose box **150** may be connected to an external water source via a hose **158.** The hose box **150** may have a circular, a rectangular or any other shape without limiting the scope of the disclosure. The hose box **150** may be made from metal, fiberglass, or plastic. The hose box **150** includes a first part **152** and a second part **154.** The first part **152** and the second part **154** may be temporarily or permanently attached to each other, such as by fasteners, screws, any suitable means as used or known in the art.

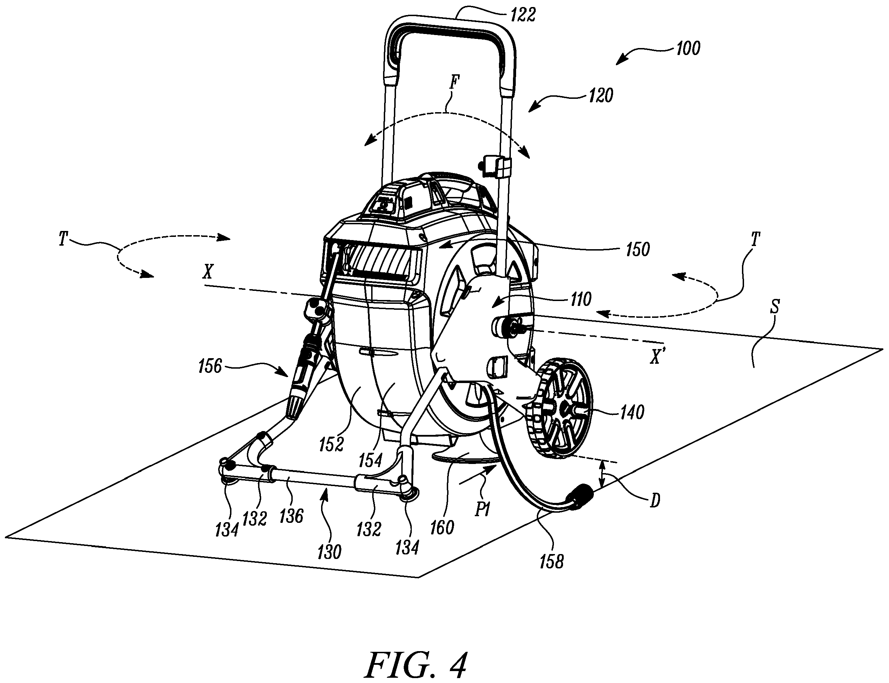

As shown in **FIG. 2****,** the hose trolley **100** further includes a ground support element **160.** The ground support element **160** allows the rotation (illustrated with turning direction **"T"** in **FIG. 4**) of the hose trolley **100** with respect to a level surface **"S".** The ground support element **160** along with the support stand **130** are adapted to support the hose box **150** on the level surface **"S".** The ground support element **160** may further be provided with support structures such as rubber inlay and the like to improve the stability of the hose trolley **100** under load if the hose **156** is pulled out an angle to the hose trolley **100.** This may substantially reduce or eliminate the tendency of the hose trolley **100** to topple or fall-over (illustrated with fall direction **"F"** in **FIG. 4**) on the level surface "S" due to torque generated, say on hose pulling at an angle to the hose trolley **100.**

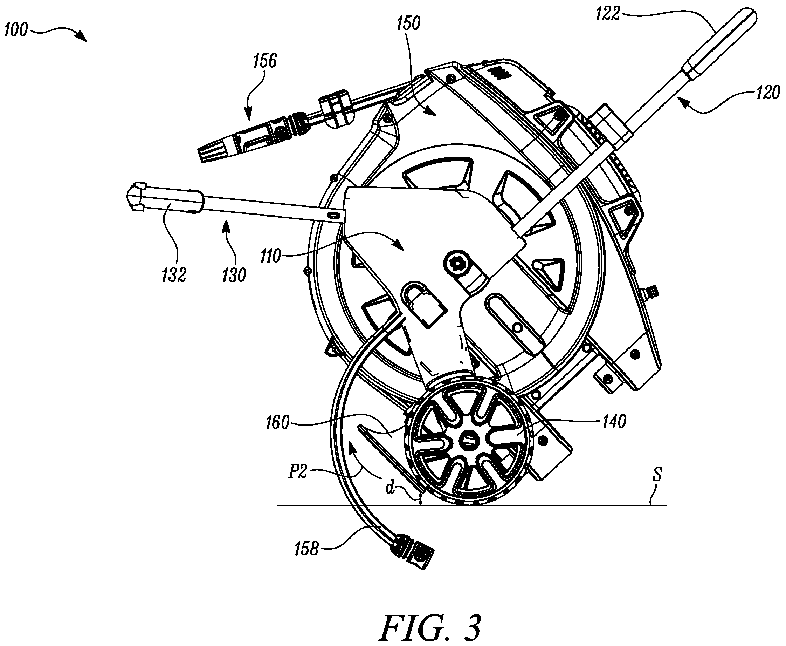

The hose trolley **100** has at least an operating position (as shown in **FIG. 2**) and a driving position (as shown in **FIG. 3**) operatively possible with the rotatable feature of the ground support element **160.** The ground support element **160** is rotatably connected to the hose trolley **100.** The ground support element **160** is in a first position **"P1"** (as shown in **FIG. 4**) and a second position **"P2"** (as shown in **FIG. 3**) for the operating position and the driving position respectively of the hose trolley **100.** In the first position **"P1",** the ground support element **160** is engageable with the level surface **"S",** and in the second position **"P2",** the ground support element **160** is disposed away from the level surface **"S".** Thus, the ground support element **160** may operatively be rotated between the first position **"P1"** and the second position **"P2"** to allow for the dynamic stability in the operating position and the freedom of rotation (for driving, movement) of the wheels **140** in the driving position, respectively.

In some embodiments, in the first position **"P1",** the ground support element **160** is substantially perpendicular to the central axis **X-X',** and in the second position **"P2",** the ground support element **160** is at an angle relative to the central axis **X-X'.**

In the operating position, the hose trolley **100** is supported on the level surface **"S"** by the support stand **130** and the ground support element **160.** The one or more wheels **140** are at a distance **"D"** of about **1-2** cm, or any other distance as per the application or size of the wheels **140** or the ground support element **160,** from the level surface **"S"** in some embodiments. The one or more wheels **140** do not contact the level surface **"S"** in the operating position. Thus, the hose trolley **100** may be able to freely turn (say about the ground support element **160** along the turning direction **"T"**) on experiencing torque and avoid or minimize the probability of toppling or fall-over (say the fall direction **"F"**) on the level surface **"S".**

In the driving position, the hose trolley **100** is supported on the level surface **"S"** by the wheels **140** and is movable on the level surface **"S".** The ground support element **160** is at a distance **"d"** of about **3-5** cm or any other distance as per the application or size of the wheels **140** or the ground support element **160,** from the level surface **"S".** The ground support element **160** and the support stand **130** do not contact the level surface **"S".** Thus, the hose trolley **100** may be easily maneuvered on the level surface **"S",** by engagement with the handle **120,** in the driving position with the help of the one or more wheels **140.**

As illustrated in **FIG. 4****,** the support stand **130** may have a U-shape grip **136.** The support stand **130** may preferably be formed in one piece or alternatively may be formed in two pieces connected to each other by any means know in the art. The support stand **130** includes one or more bases **132** which contact the level surface **"S".** The bases **132** may be made of any material such as polymer, metal and the like, the present disclosure may be preferably implemented with plastic bases **132,** and both these terms used interchangeably hereinafter. The plastic bases **132** reduce the required bending radius of the support stand **130,** which may be an aluminum tube. Further, the friction of the plastic bases **132** may be lower than the aluminum tube and thus additionally allows a better turning (say along the turning direction **"T"** substantially parallel to the level surface **"S"** as illustrated here) of the hose trolley **100,** along with implementation benefits such as improved service life and the like. As illustrated in **FIG. 4****,** the one or more plastic bases **132** are provided with one or more rollers **134.** The one or more rollers **134** may be partially or fully in contact with the level surface **"S".** The present disclosure illustrates half portions of the rollers **134** with the bases **132,** however actual implementation of the present disclosure may have any arrangement, type, orientation, shape, size and the like of the rollers **134.** The rollers **134** on the bases **132** may further reduce friction for contact with the level surface **"S".** Thus, the hose trolley **100** may be able to turn with ease and eliminate or minimize the fall-over tendency on the level surface "S".

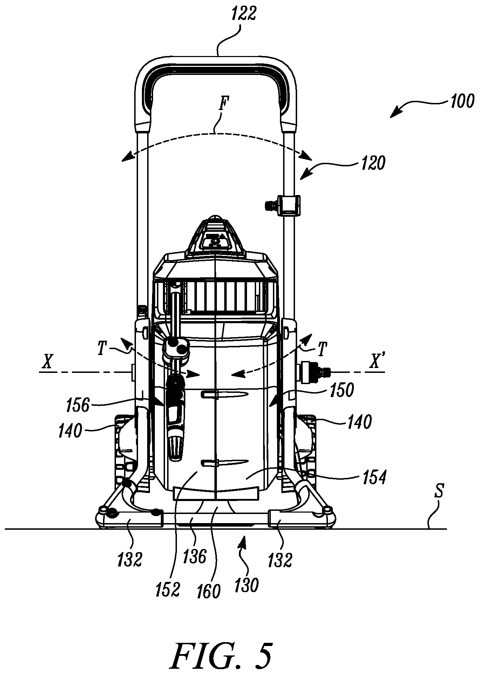

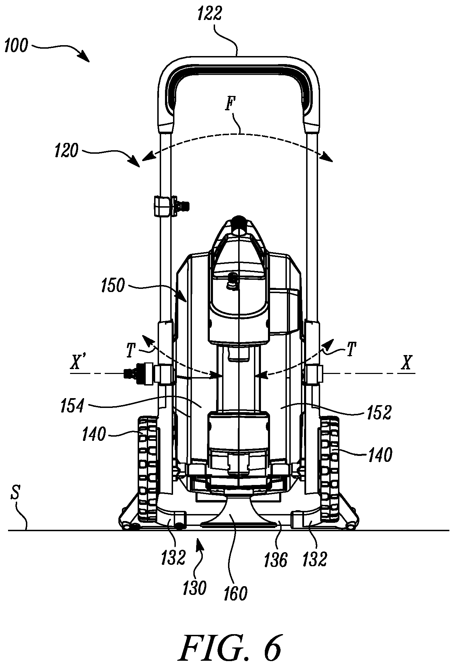

The wheels **140,** as shown in **FIGS. 5** and **6****,** are two wheels which do not contact the level surface **"S",** when the hose trolley **100** is in the operating position. The two wheels **140** do not contact the level surface **"S"** so as to not to restrict the sideways or turning movement of the hose trolley **100.** The two wheels **140** may be operationally coupled each on both the sides of the hose trolley **100** to provide sideways fall-over support. The wheels **140** may be rotatably coupled with an axle (not shown). The wheels **140** may ease support and movement of the hose trolley **100** on the level surface **"S"** or improve portability between different locations/installations. In some embodiments, the wheels **140** may be caster wheels **140.** The caster wheels **140** may help to easily manipulate the hose trolley **100** on the level surface "S". In some embodiments, the one or more wheels **140** and the axle may be provided with dampers (not shown) to avoid shocks incurred due to movement on any uneven surfaces, among other considerations. In some embodiments, the one or more wheels **140** may be powered by an electric motor (not shown), or any other powering means.

In some embodiments, the wheels **140** may be removably coupled with the frame **110.** The wheels **140** may be removable to allow easy servicing, or even replacement. Further, the removable feature of the wheels **140** may make the hose trolley **100** more compact for packaging.

The hose trolley **100** includes the handle **120.** The handle **120** includes a grip portion **122.** The grasping of the grip portion **122** of the handle **120** may provide better hold and safe working, movability of the hose trolley **100** between locations. In some embodiments, the grip portion **122** may be defined as an inverted U-shaped portion of the handle **120.** The material used for the grip portion **122** may preferably be, but need not necessarily, PVC or nitrile rubber, or any other plastic or polymer to suit application needs.

In some embodiments, the handle **120** of the hose trolley **100** may be pivotably coupled to the frame **110.** The pivotable nature of the handle **120** may improve the ergonomics of the hose trolley **100.** The pivotable handle **120** may also make the hose trolley **100** more compact for packaging, storage, and travel. In some embodiments, the handle **120** includes a locking mechanism (not shown) to lock the handle **120** in the pivotable position. The locking mechanism may provide a safe and trouble-free operation by disallowing any accidental movement of the pivotable handle **120.** The locking mechanism may be lever such as a ringshaped lever to allow easy locking/unlocking of the handle **120.** In some embodiments, the handle **120** may be telescopic. The telescopic nature of the handle **120** may further improve the ergonomics of the hose trolley **100.** The user may adjust the height of the handle **120** to a comfortable position and easily hold or maneuver the hose trolley **100** on the level surface **"S".**

Thus, the present disclosure provides the hose trolley **100** with improved dynamic stability. The dynamic stability in operating position is achieved by virtue of the ground support element **160** and the support stand **130.** The ground support element **160** and the support stand **130** assist in slight turning (the turning direction **"T"**) or sideways movement of the hose trolley **100** as required when a hose **156** is pulled out of the hose box **150** at an angle relative to the hose trolley **100.** Thus, a fall-over or toppling tendency (say along the fall direction **"T"**) of the hose trolley **100** is substantially reduced or eliminated. Further, the dynamic stability in operating driving position is achieved by virtue of the one or more wheels **140.** The one or more wheels **140** surface may be designed to provide better grip on the level surface **"S"** or avoid slip on the level surface **"S".**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Hose Trolley
- **110**: Frame
- **120**: Handle
- **122**: Grip Portion
- **130**: Support Stand
- **132**: Bases
- **134**: Rollers
- **136**: Grip
- **140**: Wheels
- **150**: Hose Reel/Box
- **152**: First Part
- **154**: Second Part
- **156**: Hose
- **158**: Hose
- **160**: Ground Support Element
- **X-X'**: Central Axis
- **D**: Distance
- **d**: Distance
- **S**: Level Surface
- **T**: Turning direction of hose trolley
- **F**: Fall direction of hose trolley
- **P1**: First Position
- **P2**: Second Position

## Claims

1. A hose trolley **(100)** comprising:
a frame **(110)** defining a central axis **(X-X'),** wherein the frame **(110)** includes:
a handle **(120);**
a support stand **(130);** and
one or more wheels **(140);**
a hose reel **(150)** housed with the frame **(110)** along the central axis **(X-X'),**
wherein the support stand **(130)** allows to support the hose trolley **(100)** on a level surface **(S);** and
a ground support element **(160);**
the hose trolley **(100)** has at least an operating position and a driving position, and wherein the ground support element **(160)** is rotatably connected to the hose trolley **(100),**
wherein in the driving position, the hose trolley **(100)** is supported on the level surface **(S)** by the wheels **(140),** whereby the hose trolley **(100)** is movable on the level surface **(S)** in the driving position;
**characterized in that:**
in the operating position, the hose trolley **(100)** is supported on the level surface **(S)** by the support stand **(130)** and the ground support element **(160)** such that the ground support element **(160)** allows the rotation of the hose trolley **(100)** with respect to the level surface **(S)** in a turning direction (T) substantially parallel to the level surface (S).

2. The hose trolley **(100)** of claim **1,** wherein the ground support element **(160)** is in a first position **(P1)** and a second position **(P2)** for the operating position and the driving position respectively of the hose trolley **(100).**

3. The hose trolley **(100)** of claim **2,** wherein in the first position **(P1)** the ground support element **(160)** is engageable with the level surface **(S)** and in the second position **(P2)** the ground support element **(160)** is disposed away from the level surface **(S).**

4. The hose trolley **(100)** of any of the preceding claims, wherein the wheels **(140)** are two wheels which do not contact the level surface **(S),** when the hose trolley **(100)** is in the operating position.

5. The hose trolley **(100)** of any of the preceding claims, wherein the one or more wheels **(140)** are at a distance **(D)** of about **1-2** cm from the level surface **(S).**

6. The hose trolley **(100)** of any of the preceding claims, wherein the support stand **(130)** includes one or more bases **(132)** which contact the level surface **(S).**

7. The hose trolley **(100)** of claim 6, wherein the one or more bases **(132)** are provided with rollers **(134).**

8. The hose trolley **(100)** of any of the preceding claims, wherein in the driving position the ground support element **(160)** is at a distance **(d)** of about **3-5** cm from the level surface **(S).**

9. The hose trolley **(100)** of any of the preceding claims, wherein the handle **(120)** is pivotably coupled to the frame **(110).**

10. The hose trolley **(100)** of any of the preceding claims, wherein the handle **(120)** is telescopic.

## Patentansprüche

1. Schlauchwagen **(100),** umfassend:
einen Rahmen **(110),** der eine Mittelachse **(X-X')** definiert, wobei der Rahmen **(110)** einschließt:
einen Griff **(120);**
einen Stützständer **(130);** und
ein oder mehrere Räder **(140);**
eine Schlauchtrommel **(150),** die mit dem Rahmen **(110)** entlang der Mittelachse **(X-X')** untergebracht ist,
wobei der Stützständer **(130)** ermöglicht, den Schlauchwagen **(100)** auf einer ebenen Oberfläche **(S)** zu stützen; und
ein Bodenstützelement **(160);**
wobei der Schlauchwagen **(100)** mindestens eine Betriebsposition und eine Fahrposition aufweist, und wobei das Bodenstützelement **(160)** mit dem Schlauchwagen **(100)** rotierbar verbunden ist,
wobei in der Fahrposition der Schlauchwagen **(100)** auf der ebenen Oberfläche **(S)** durch die Räder **(140)** gestützt wird, wodurch der Schlauchwagen **(100)** auf der ebenen Oberfläche **(S)** in der Fahrposition bewegbar ist;
**dadurch gekennzeichnet, dass:**
in der Betriebsposition der Schlauchwagen **(100)** auf der ebenen Oberfläche **(S)** durch den Stützständer **(130)** und das Bodenstützelement **(160)** derart gestützt wird, dass das Bodenstützelement **(160)** die Rotation des Schlauchwagens **(100)** in Bezug auf die ebene Oberfläche **(S)** in einer Drehrichtung (T) im Wesentlichen parallel zu der ebenen Oberfläche (S) ermöglicht.

2. Schlauchwagen **(100)** nach Anspruch **1,** wobei sich das Bodenstützelement **(160)** in einer ersten Position **(P1)** und einer zweiten Position **(P2)** für die Betriebsposition und die Fahrposition des Schlauchwagens **(100)** befindet.

3. Schlauchwagen **(100)** nach Anspruch **2,** wobei in der ersten Position **(P1)** das Bodenstützelement **(160)** mit der ebenen Oberfläche **(S)** in Eingriff gebracht werden kann und in der zweiten Position **(P2),** das Bodenstützelement **(160)** weg von der ebenen Oberfläche **(S)** angeordnet ist.

4. Schlauchwagen **(100)** nach einem der vorstehenden Ansprüche, wobei die Räder **(140)** zwei Räder sind, die die ebene Oberfläche **(S)** nicht berühren, wenn sich der Schlauchwagen **(100)** in der Betriebsposition befindet.

5. Schlauchwagen **(100)** nach einem der vorstehenden Ansprüche, wobei sich das eine oder die mehreren Räder **(140)** in einem Abstand **(D)** von etwa **1-2** cm von der ebenen Oberfläche **(S)** befinden.

6. Schlauchwagen **(100)** nach einem der vorstehenden Ansprüche, wobei der Stützständer **(130)** eine oder mehrere Basen **(132)** einschließt, die die ebene Oberfläche **(S)** berühren.

7. Schlauchwagen **(100)** nach Anspruch 6, wobei die eine oder die mehreren Basen **(132)** mit Rollen **(134)** versehen sind.

8. Schlauchwagen **(100)** nach einem der vorstehenden Ansprüche, wobei sich in der Fahrposition das Bodenstützelement **(160)** in einem Abstand **(d)** von etwa **3-5** cm von der ebenen Oberfläche **(S)** befindet.

9. Schlauchwagen **(100)** nach einem der vorstehenden Ansprüche, wobei der Griff **(120)** mit dem Rahmen **(110)** schwenkbar gekoppelt ist.

10. Schlauchwagen **(100)** nach einem der vorstehenden Ansprüche, wobei der Griff **(120)** teleskopisch ist.

## Revendications

1. Dévidoir sur roues **(100)** comprenant :
un châssis **(110)** définissant un axe central **(X-X'),** dans lequel le châssis **(110)** comporte :
une poignée **(120)** ;
un support d'appui **(130)** ; et
une ou plusieurs roues **(140)** ;
un dévidoir **(150)** logé avec le châssis **(110)** le long de l'axe central **(X-X'),**
dans lequel le support d'appui **(130)** permet de supporter le dévidoir sur roues **(100)** sur une surface plane **(S)** ; et
un élément de support au sol **(160)** ;
le dévidoir sur roues **(100)** a au moins une position de fonctionnement et une position de conduite, et dans lequel l'élément de support au sol **(160)** est relié de manière rotative au dévidoir sur roues **(100),**
dans lequel dans la position de conduite, le dévidoir sur roues (100) est supporté sur la surface plane **(S)** par les roues **(140),** moyennant quoi le dévidoir sur roues **(100)** peut être déplacé sur la surface plane **(S)** dans la position de conduite ;
**caractérisé en ce que** :
dans la position de fonctionnement, le dévidoir sur roues **(100)** est supporté sur la surface plane **(S)** par le support d'appui **(130)** et l'élément de support au sol **(160)** de telle sorte que l'élément de support au sol **(160)** permet la rotation du dévidoir sur roues **(100)** par rapport à la surface plane **(S)** dans une direction tournante (T) sensiblement parallèle à la surface plane (S).

2. Dévidoir sur roues **(100)** selon la revendication **1,** dans lequel l'élément de support au sol **(160)** est dans une première position **(P1)** et une seconde position **(P2)** pour la position de fonctionnement et la position de conduite respectivement du dévidoir sur roues **(100).**

3. Dévidoir sur roues **(100)** selon la revendication **2,** dans lequel dans la première position **(P1)** l'élément de support au sol **(160)** peut venir en prise avec la surface plane **(S)** et dans la seconde position **(P2)** l'élément de support au sol **(160)** est disposé à l'écart de la surface plane **(S).**

4. Dévidoir sur roues **(100)** selon l'une quelconque des revendications précédentes, dans lequel les roues **(140)** sont deux roues qui ne viennent pas en contact avec la surface plane **(S),** lorsque le dévidoir sur roues **(100)** est dans la position de fonctionnement.

5. Dévidoir sur roues **(100)** selon l'une quelconque des revendications précédentes, dans lequel la ou les roues **(140)** sont à une distance **(D)** d'environ **1** à **2** cm de la surface plane **(S).**

6. Dévidoir sur roues **(100)** selon l'une quelconque des revendications précédentes, dans lequel le support d'appui **(130)** comporte une ou plusieurs bases **(132)** qui viennent en contact avec la surface plane **(S).**

7. Dévidoir sur roues **(100)** selon la revendication 6, dans lequel la ou les bases **(132)** sont pourvues de roulettes **(134).**

8. Dévidoir sur roues **(100)** selon l'une quelconque des revendications précédentes, dans lequel dans la position de conduite l'élément de support au sol **(160)** est à une distance **(d)** d'environ **3** à **5** cm de la surface plane **(S).**

9. Dévidoir sur roues **(100)** selon l'une quelconque des revendications précédentes, dans lequel la poignée **(120)** est accouplée de façon pivotante au châssis **(110).**

10. Dévidoir sur roues **(100)** selon l'une quelconque des revendications précédentes, dans lequel la poignée **(120)** est télescopique.
